# EUROPEAN PATENT APPLICATION

(11) **EP 2 868 246 A1**
(43) Date of publication of application: **06.05.2015**
(21) Application number: 14184654.3
(22) Date of filing: 12.09.2014
(51) Int. Cl.: A47J 37/07

(54) **Grill rod scraping tool and related methods**

(30) Priority: 30.10.2013 US 201314067850
(71) Applicant: Edwins, John D., Del Mar, CA 92014-1788 (US)
(72) Inventor: Edwins, John D., Del Mar, CA 92014-1788 (US)
(74) Representative: Appleyard Lees

(57) **Abstract**

A grill rod scraping tool for cleaning the top, sides and bottom side of grill rods. The tool comprises of a neck with concave contours and a U-shaped end that enable the prongs and scraper of the tool to scrape the top, sides, and bottom side of the grid iron rods. The concave contours of the neck also allow both left and right handed individuals to operate and rotate the tool with ease. The prongs are angled away from the neck to enable the tool to be used while the grid iron rods are still hot. The grill tool is applied to the grill rod and pushed and pulled along the length of the grill rod to clean residue from food and hardened char.

## Description

### Field of the Invention

The subject matter of this disclosure is in the field of apparatus for cleaning and/or scraping grill rods, and related methods.

### Background of the Invention

Grid irons, in cooking vernacular, are a metallic grates that are typically defined by an array of parallel bars or rods, sometimes known as grill rods. When used for cooking, a grid iron is positioned above or below a heat source while food stuffs are positioned on the grill rods of the grid iron for cooking. In practice, residue of food stuff, including char, can remain adhered to surfaces of the grill rods after use. Residual food stuff can be problematic during later uses of the grill rods because the residue can contaminate subsequent food preparations and, as a result, affect flavor or cause illness to consumers of subsequent preparations. Thus, a need exists for apparatus and related methods of cleaning grill rods.

A variety of apparatus exist for cleaning grill rods. Most of such apparatus operate by scraping the tops of grill rods to remove residue and char. Sometimes scraping is accomplished via brushes with stiff bristles (e.g., metal brushes), but these brushes either (i) do not adequately eliminate hardened char and hard residues or (ii) have bristle failure rapidly. Apparatus for cleaning grid irons have also employed various types of scraping blades, but blades are not entirely satisfactory for cleaning grill rods because the sides and bottom side of a grill rod are not cleaned without turning the grid iron over because the action of twisting the tool around the grill rod results in a conflict between the cleaning apparatus and the other grill rods of the grid iron grate. In view of the foregoing, a need exists for apparatus and related methods of cleaning grid irons where the apparatus is sturdy and rigid enough to eliminate hardened char and residue from the top, sides, and bottom of the grill rods, without having to cool down and overturn the grid iron plate.

Others have attempted unsuccessfully to solve the problem of the present application. For example, U.S. Patent No. 5,255,406 (Rood) is only able to clean the top of grill rods unless the user turns the grid iron over on to the other side. U.S. Patent No. 4,241,342 (Amundsen) can only be used while the grid iron is cool and scraper only fits two grill rod sizes. U.S. Patent No. 7,275,278 (Martin et al.) cannot be used to clean the bottom side of the grill rod without lifting and overturning the entire grid iron. U.S. Patent No. 4,958,403 (Martin) only employs a scraper that fits two grill rod sizes and the tool is inhibited by adjacent rods, which renders the tool difficult to rotate. The apparatus disclosed in U.S. Pat. No. 3820185 (Phillips) is not adequate for many grill rod cleaning situations. The twist in the blade of the apparatus limits the use of the same to one-hand. Moreover, the apparatus is not suitable to be used on grill rods of many sizes. Furthermore, the orientation of the scrapping surface requires a close proximity between a user's hand and the grid iron, which renders the cleaning of hot grid irons difficult. As a result, a need still exists for apparatus and related methods of cleaning all sides of a hot or cold grid iron rod.

### SUMMARY OF THE INVENTION

According to the present invention there is provided an apparatus and method as set forth in the appended claims. Other features of the invention will be apparent from the dependent claims, and the description which follows.

Accordingly, there may be provided a grill rod scraping tool that allows a right or left handed user to clean the entire circumference of a grill rod.

There may also be provided a grill rod scraping tool that cleans a grill rod of hardened char.

It is another object of the present application to provide a grill rod scraping tool that can be safely used while the grill rods are hot.

There may also be provided a grill rod scraping tool that can be used on a wide variety of grill rod sizes.

The disclosed apparatus may comprise a handle and a neck. The neck may have a concave contour and a "U-shaped" end defined by two prongs. The neck may feature a concave contour along either side to allow a user to clean an entire grill rod, without interfering with adjacent grill rods, by rotating the tool along a broad range of angles while scraping the grill rod. The neck's concave contours may further permit a right or left handed use with equal effectiveness. The prongs may be directed at an angle in a range of one-hundred and twenty degrees to one-hundred and seventy degrees away from the neck. The prongs may be directed at an angle of approximately one-hundred and forty-five degrees away from the neck, allowing a user to clean a hot grill rod without having his or her hand too close to the grilling heat.

### BRIEF DESCRIPTION OF THE FIGURES

The manner in which these objectives and other desirable characteristics can be obtained is explained in the following description and attached figures in which:
FIG. 1 is a perspective view of a grill tool featuring a neck 100 with prongs 130 and concave contours defined on the neck;
FIG. 2 is a front view of grill tool of FIG. 1 featuring a neck 100, prongs 130, scraper 120, concave contour 110, a handle 200, and fasteners 210;
FIG. 3 is a back view of grill tool of FIG. 1 featuring a neck 100, prongs 130, scraper 120, concave contour 110, handle 200, and fasteners 210;
FIG. 4 is a top view of the grill tool of FIG. 1 featuring prongs 130, scraper 120, and a handle 200;
FIG. 5 is a bottom view of the grill tool of FIG. 1 featuring prongs 130 and a handle 200;
FIG. 6 is a side view of a neck 100, prongs 130, slot 220, a handle 200, and an angle # with a range of one-hundred and twenty degrees to one-hundred and seventy degrees;
FIG. 7 is an environmental view of a user applying the grill tool to a grill rod and pushing and pulling the tool along the length of the grill rod; and
FIG. 8 is an environmental view of a user applying the grill tool a grill rod and rotating the grill tool to either side of the grill rod in order to facilitate cleaning the sides and bottom side of the grill rod.

It should be noted that the figures are merely for illustrative purposes and depict only preferred embodiments of the disclosed apparatus or methods. Also, drawings are not necessarily made to scale.

### DETAILED DESCRIPTION OF THE INVENTION

Generally disclosed is a grill rod scraping tool. Operably, the grill rod scraping tool may be applied to grill rods and pushed and pulled along the length of the grill rods to scrape and clean the grill rods. Suitably, the grill rod scraping tool may be (1) used to clean the top, bottom side, and sides of grill rods, (2) used with either the left or right hand, and (3) used while the grill rods are still hot or cool.

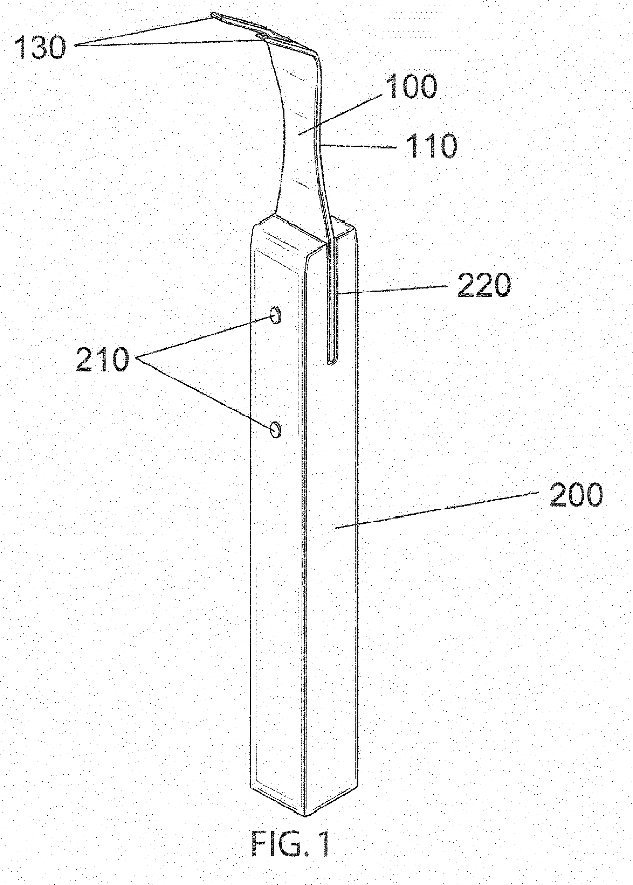

FIG. 1 is a perspective view of one preferable embodiment of the grill rod scraping tool. As shown in the figure, this embodiment comprises a neck 100 that is securely affixed to a handle 200. The neck 100 sometimes sits inside a slot 220 at the top of the handle 200. The neck 100 may be affixed to the handle 200 by two fasteners 210. The fasteners 210 may be screws or any other suitable mechanical device that affixes two items of hardware. The neck 100 culminates with a U-shaped design comprising of prongs 130 and a scraper 120 that are angled approximately one-hundred and forty-five degrees away from the neck 100.

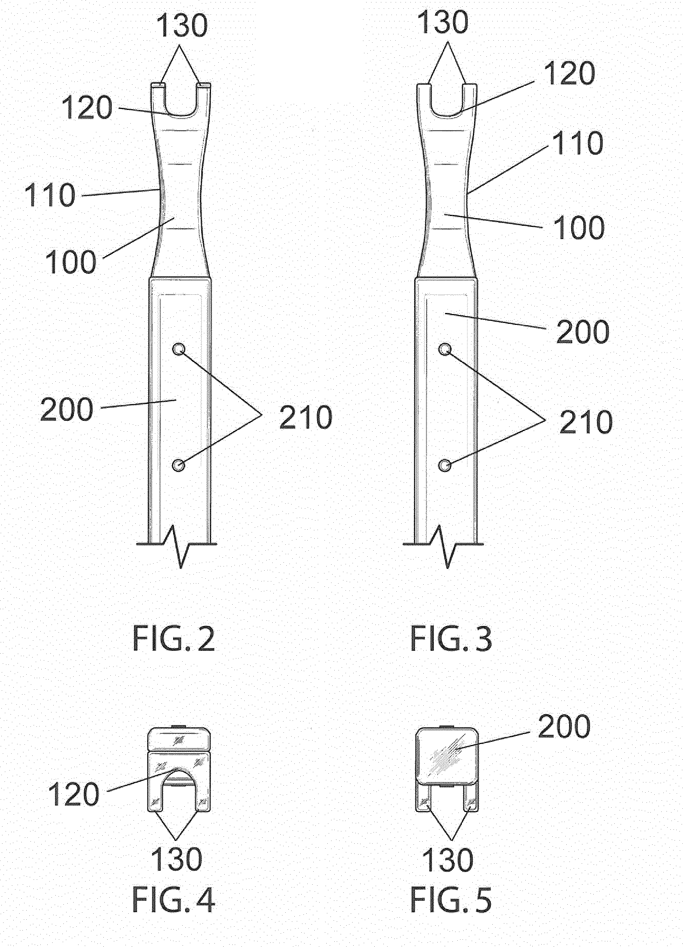

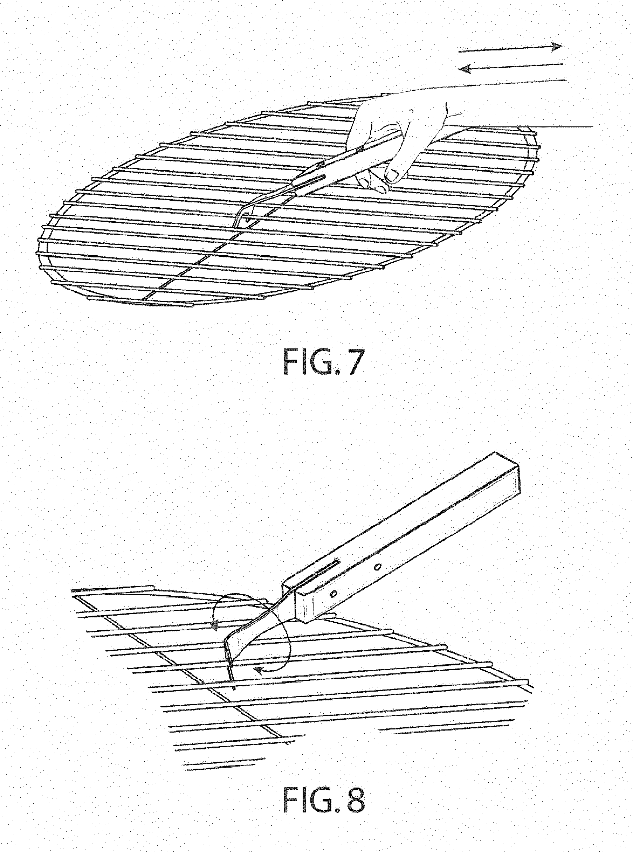

FIG. 2 depicts a front view of one preferable embodiment of the invention. The grill rod scraping tool may be used with either hand to scrape food deposits and hardened char off of the grid iron rods. In use, as shown in FIG. 7, the user applies the prongs 130 over the grill rod, places the scraper 120 in contact with the top of the grill rod, applies force to the handle 200, and pushes or pulls the handle 200 along the length of the grill rod. Residue is released from the rod and yet, unlike a brush, the tool is not damaged or worn out and easily used numerous times.

As shown in FIG. 2, the concave contours 110 on the neck 100 allow the user to rotate the grill tool that is in contact with a grill rod without interference from the adjacent grill rods. As shown in FIG. 8, the concave contours 110 on the neck 100 also allow the user to rotate the grill tool, with either the left or right hand, to the left or right at approximately forty-five degrees so that the scraper 120 is in contact with the side of the grill rod and the prongs 130 are in contact with the top and bottom side of the grill rod. The user then pushes or pulls the handle 200 along the length of the grill rod to scrape food stuffs and hardened char off of the sides and bottom side of the grill rod.

FIG. 3 is a back view of the grid iron scraping tool with a full view of the prongs 130 and scraper 120. The prongs 130 are positioned sufficiently apart so that they may conveniently be placed around a grill rod of many sizes. The concave contour 110 allow the grill tool to be rotated along a broader range of angles in order for the prongs 130 and scraper 120 to reach the sides and bottom side of the grill rod.

Fig. 4 is a top view of the grill cleaning tool with an overhead view of the prongs 130 and its relation to the handle 200.

Fig. 5 is a bottom view of the prongs 130 and the handle 200 that is configured in a square.

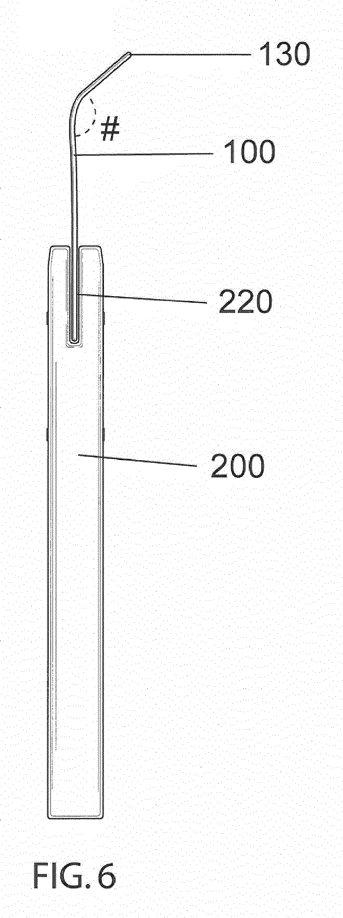

Fig. 6 is a side view of the handle 200, slot 220, neck 100 and prongs 130. As seen in the figures, the neck 100 is inserted through the slot 220 and into the handle 200. In another embodiment the handle 200 may be an extension of the neck 100 and uniformly constructed from the same material as the neck 100. The prongs 130 are preferably angled down and away from the neck 100 at approximately one-hundred and forty-five degrees. Operably, the angle of the prongs 130 away from the neck 100 allows the grid iron scraping tool to be applied and used while the grid iron is emanating heat because the angle positions the hand holding the handle away from the grid iron, as opposed to a prongs that feature a ninety degree angle, wherein the hand would be too close to the grid iron and encounter uncomfortable heat.

In any preferable embodiment, the neck 100, prongs 130, and scraper 120 are preferably composed of stainless steel, but may be constructed of any other materials with an adequate hardness factor that ranges from 48-58 HRC. A further ideal stainless steel is a 400 series stainless steel. The prongs 130 may be designed in different configurations; such has rounded ends, squared off ends, or pointed ends. The scraper is preferably defined by two prongs that are separated by a distance between one another in a range of ¼ inch to 1.0 inch (6.35mm to 25.4mm). The handle 200 may consist of wood, plastics, stainless steel, alloys, composites, or any other materials known to a person skilled in the art. Preferably handle materials while be heat resistant to avoid melting on hot grills. The handle 200 may also be structured to be a square, rectangle, triangle, or any other geometric shape that a handle may employ.

This specification and the appended figures illustrate only typical embodiments or principles disclosed in this application, and therefore, are not to be considered limiting of its scope, for the invention may admit to other equally effective embodiments that will be appreciated by those reasonably skilled in the relevant arts. Any invention disclosed by this specification is defined by the claims. While the ideas herein disclosed has been described by means of specific embodiments and applications thereof, numerous modifications and variations could be made thereto by those skilled in the art without departing from the scope of the invention set forth in the claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for scraping grill rods comprising of:
a neck with a first end an a second end;
wherein the first end is defined by at least one prong and a scraper;
wherein the second end forms a handle; and
wherein the neck is further defined by at least one concave contour.

2. The apparatus of claim 1 wherein said prongs are angled away from the neck at approximately one-hundred and forty-five degrees.

3. The apparatus of claim 2 wherein said prongs are positioned at least seven-sixteenth of an inch (25mm) apart from each other.

4. The apparatus of claim 1 wherein two concave contours are featured symmetrically on opposite sides of the neck.

5. The apparatus of claim 1 wherein the neck and first end are constructed with steel.

6. A method of cleaning a grill rod by:
obtaining a grill cleaning tool comprising:
a neck with a first end an a second end;
wherein the first end is defined by at least one prong and a scraper;
wherein the second end defines a handle;
wherein the neck is further defined at least one concave contour;
applying at least one prong over the grill rod;
placing the scraper in contact with the grill rod;
forcing the scraper along the length of the grill rod, whereby residue is dislodged.

7. The method of claim 1 wherein the grill rod scraping tool is rotated to the right or left.

8. The method of claim 7 wherein the said scraper is in contact with the right side of the grill rod and a prong is in contact with a portion of the bottom side of the grill rod.

9. The method of claim 8 wherein the grill rod scraping tool is pushed or pulled along the length of the grill rod.

10. The method of claim 7 wherein the said scraper is in contact with the left side of the grill rod and a prong is in contact with the bottom side of the grill rod.

11. The method of claim 10 wherein the grill rod scraping tool is pushed or pulled along the length of the grill rod.

12. The method of claim 6 wherein the scraper being used is formed from a 400 series stainless steel, whereby residue may be effectively removed from the grill rod with minimal damage to the scraper.

13. The method of claim 6 wherein the first end of a scraper is defined by two prongs that are separated by a distance between one another in a range of ¼ inch to 1.0 inch (6.35 mm to 25.4mm).

## Amended claims

### Amended claims in accordance with Rule 137(2) EPC.

1. An apparatus for scraping grill rods comprising of:
a neck (100) with a first end and a second end;
wherein the first end is defined by at least one prong (130) and a scraper (120);
wherein the second end forms a handle (200); and
wherein the neck (100) is provided with at least one concave contour (110) on one side of the neck (100) to define a narrowed region of the neck (100) between the first end and the second end.

2. The apparatus of claim 1 wherein said prongs (130) are angled away from the neck (100) at approximately one-hundred and forty-five degrees.

3. The apparatus of claim 2 wherein said prongs (130) are positioned at least seven-sixteenth of an inch (25mm) apart from each other.

4. The apparatus of claim 1 wherein two concave contours (110) are featured symmetrically on opposite sides of the neck (100) to define a narrowed region of the neck (100) between the first end and the second end.

5. The apparatus of claim 1 wherein the neck (100) and first end are constructed with steel.

6. A method of cleaning a grill rod by:
obtaining a grill cleaning tool comprising:
a neck (100) with a first end an a second end;
wherein the first end is defined by at least one prong (130) and a scraper (120);
wherein the second end defines a handle (200);
wherein the neck (100) is provided with at least one concave contour (110) on one side of the neck (100) to define a narrowed region of the
neck (100) between the first end and the second end;
applying at least one prong (130) over the grill rod;
placing the scraper (120) in contact with the grill rod
such that the narrowed region provides a space between an adjacent grill rod and the neck (100); and
forcing the scraper (120) along the length of the grill rod, whereby residue is dislodged.

7. The method of claim 1 wherein the grill rod scraping tool is rotated to the right or left.

8. The method of claim 7 wherein the said scraper (120) is in contact with the right side of the grill rod and a prong (130) is in contact with a portion of the bottom side of the grill rod.

9. The method of claim 8 wherein the grill rod scraping tool is pushed or pulled along the length of the grill rod.

10. The method of claim 7 wherein the said scraper (120) is in contact with the left side of the grill rod and a prong (130) is in contact with the bottom side of the grill rod.

11. The method of claim 10 wherein the grill rod scraping tool is pushed or pulled along the length of the grill rod.

12. The method of claim 6 wherein the scraper (120) being used is formed from a 400 series stainless steel, whereby residue may be effectively removed from the grill rod with minimal damage to the scraper.

13. The method of claim 6 wherein the first end of a scraper is defined by two prongs (130) that are separated by a distance between one another in a range of ¼ inch to 1.0 inch (6.35 mm to 25.4mm).
